# EUROPEAN PATENT APPLICATION

(11) **EP 4 843 713 A1**
(43) Date of publication of application: **25.11.2026**
(21) Application number: 26164727.5
(22) Date of filing: 13.03.2026
(51) Int. Cl.: B25J 5/00, B25J 11/00, B62B 5/00

(54) **GROUND TRANSPORT TROLLEY WITH ADJUSTABLE WHEEL PRESSURE**

(30) Priority: 23.05.2025 CN 202510673188
(71) Applicant: Zhejiang Galaxis Technology Group Co., Ltd., Jiaxing, Zhejiang 314000 (CN)
(72) Inventor:
(74) Representative: Casalonga

(57) **Abstract**

The present invention provides a traveling wheel assembly for a ground transport trolley, a traveling mechanism, a ground transport trolley, and a transport method, which have adjustable wheel pressure and ensure traveling stability. The ground transport trolley includes a fixed portion. The traveling wheel assembly for a ground transport trolley includes: a traveling wheel; a wheel cover fixedly connected to the fixed portion; a support member vertically movably connected to the fixed portion and supporting the traveling wheel to be rotatable; and a pressurizing device. The pressurizing device includes: a first elastic member having a bottom end supported on the support member; a movable member movable downward relative to the wheel cover to apply a force to a top end of the first elastic member to compressively deform the first elastic member to increase a ground pressure of the traveling wheel via the support member; and a pressurizing drive source for driving the movable member to move.

## Description

### Technical Field

The present invention relates to a traveling wheel assembly for a ground transport trolley, a traveling mechanism, a ground transport trolley, and a transport method.

### Background Art

For existing ground transport trolleys, springs (traditional suspension) are used for pressure adjustment of driving wheels to keep the driving wheels in close contact with the ground. In the structure, an elastic force of the springs cannot exceed the self-weight of the trolley, and an excessively large elastic force will cause the trolley to lift up. Moreover, under heavy load, the driving wheels will have insufficient ground pressure (since the springs fail to provide adequate wheel pressure after being heavily loaded), making the trolley unable to travel normally.

### Summary

The present invention is made in view of the above problems, and is intended to provide a traveling wheel assembly for a ground transport trolley, a traveling mechanism, a ground transport trolley, and a transport method, which have adjustable wheel pressure and ensure traveling stability.

A first aspect of the present invention provides a traveling wheel assembly for a ground transport trolley including a fixed portion, the traveling wheel assembly for a ground transport trolley including: a traveling wheel; a wheel cover fixedly connected to the fixed portion; a support member vertically movably connected to the fixed portion and supporting the traveling wheel to be rotatable; and a pressurizing device including: a first elastic member having a bottom end supported on the support member; a movable member movable downward relative to the wheel cover to apply a force to a top end of the first elastic member to compressively deform the first elastic member to increase a ground pressure of the traveling wheel via the support member; and a pressurizing drive source for driving the movable member to move.

The traveling wheel assembly for a ground transport trolley according to the present invention can adjust a compression amount of the first elastic member by adjusting a vertical position of the movable member, so as to achieve the purpose of controlling a wheel pressure (i.e., ground pressure), adapt to larger load changes, and provide a traveling wheel assembly which has adjustable wheel pressure and ensures traveling stability.

In an embodiment, the pressurizing device includes a linear actuator that directly or indirectly converts a rotational movement of an electric motor serving as the pressurizing drive source into a vertical movement of the movable member via a transmission mechanism, so as to compress or release the first elastic member. The linear actuator enables high-precision and high-speed displacement control.

In an embodiment, the linear actuator has: a lead screw rotatably supported on the wheel cover and driven to rotate by the electric motor; and a nut in threaded engagement with the lead screw, the nut being fixed to the movable member, and the first elastic member is an elastic member with a cavity into which the lead screw is inserted. According to the above structure, the linear actuator can be disposed to make full use of the cavity of the first elastic member, which facilitates the miniaturization of the pressurizing device.

In an embodiment, the pressurizing device includes a sprocket and chain transmission mechanism, and the sprocket and chain transmission mechanism includes: a drive sprocket connected to an output end of the electric motor; a driven sprocket connected to a top end of the lead screw; and a chain engaging the drive sprocket and the driven sprocket. According to the above structure, for example, compared with the case where the output end of the electric motor is directly connected to the top end of the lead screw, the dimension of the pressurizing device in the vertical direction can be reduced.

In an embodiment, a groove is formed between the nut and the movable member, or in the movable member, the groove opens downward, and the top end of the first elastic member is located in the groove. According to the above structure, the top end portion of the first elastic member can be limited, preventing the top end portion of the first elastic member from deviating and enabling the movable member to reliably apply force to the top end of the first elastic member.

In an embodiment, the traveling wheel assembly for a ground transport trolley further includes a pressure receiving plate fixedly connected to the support member, a bottom end of the first elastic member being supported on the pressure receiving plate, where the pressure receiving plate is provided with an upwardly protruding cylindrical portion, and the cylindrical portion is inserted into the cavity. According to the above structure, the bottom end portion of the first elastic member can be limited, preventing the bottom end portion of the first elastic member from deviating and reliably supporting the bottom end of the first elastic member.

In an embodiment, the pressure receiving plate is provided with a wall portion, and in a direction perpendicular to the vertical direction, the cylindrical portion is opposed the wall portion with the first elastic member therebetween. According to the above structure, the bottom end of the first elastic member can be further reliably supported.

In an embodiment, the movable member has a rotation-preventing portion, and the pressurizing device further includes a guide for guiding the movement of the movable member in a vertical direction, the guide being in contact with the rotation-preventing portion in a manner that prevents the movable member from rotating. According to the above structure, the rotation of the nut and the movable member can be restricted, enabling the nut and the movable member to move smoothly in the vertical direction.

In an embodiment, the traveling wheel assembly further includes a wheel drive source for driving the traveling wheel to rotate. By providing the pressurizing device on the driving wheel, the pressurization effect is better compared with the case where it is provided on a non-driving wheel.

In an embodiment, the traveling wheel assembly further includes a second elastic member having a bottom end supported on the support member and a top end supported on the wheel cover, the second elastic member exerting a downward force on the support member via compressive deformation. According to the above structure, for example, when the ground transport trolley using the traveling wheel assembly is unloaded, the compressed second elastic member can provide the required wheel pressure, reducing the load on the pressurizing device.

In an embodiment, at least one of the first elastic member and the second elastic member is a spring.

A second aspect of the present invention provides a traveling mechanism, including a traveling wheel assembly for a ground transport trolley according to any one of the above embodiments.

The traveling mechanism according to the second aspect of the present invention can achieve good ground adaptability and traveling stability via the traveling wheel assembly.

In an embodiment, the traveling mechanism further includes a caster wheel supported on the fixed portion, the traveling wheel assembly further includes a wheel drive source for driving the traveling wheel to rotate.

A third aspect of the present invention provides a ground transport trolley, including a traveling wheel assembly for a ground transport trolley according to any one of the above embodiments or including a traveling mechanism according to any one of the above embodiments.

The ground transport trolley according to the third aspect of the present invention can achieve good ground adaptability and traveling stability via the traveling wheel assembly.

In an embodiment, the ground transport trolley further includes: a first sensor for detecting a load weight of the ground transport trolley; and a control unit for receiving a first signal related to the load weight of the ground transport trolley detected by the first sensor, determining a desired movement distance of the movable member based on the first signal, and causing the pressurizing drive source to drive the movable member to move downward by the desired movement distance. According to the above structure, automatic adjustment according to the load is achieved by driving the pressurizing drive source based on the load weight of the ground transport trolley to compress the first elastic member, thereby providing an appropriate elastic force and achieving the required wheel pressure.

In an embodiment, the ground transport trolley includes a limiting mechanism disposed on at least one of the movable member, the wheel cover, and the fixed portion, the limiting mechanism being configured to limit the movable member from moving downward beyond a predetermined position. By providing the limiting mechanism, abnormalities caused by the movable member moving downward beyond the predetermined position can be avoided.

In an embodiment, the limiting mechanism includes: a control unit for controlling an operation of the pressurizing drive source; a trigger plate disposed on the movable member to move together with the movable member; and a second sensor fixed to the wheel cover or the fixed portion via a bracket and located below the trigger plate, where when the trigger plate moves to a position where a distance from the second sensor is less than a predetermined distance and triggers the second sensor, the second sensor sends a second signal to the control unit, and the control unit that receives the second signal causes the pressurizing drive source to stop operating. According to the above structure, when the movable member attempts to move downward beyond the predetermined position, the second sensor is triggered, which can timely stop the operation of the pressurizing drive source to avoid abnormalities.

A fourth aspect of the present invention provides a transport method for transporting goods using a ground transport trolley according to any one of the above embodiments, the ground transport trolley further including a first sensor for detecting a load weight of the ground transport trolley, and the transport method including: determining a desired movement distance of the movable member based on the load weight of the ground transport trolley detected by the first sensor, and causing the pressurizing drive source to drive the movable member to move downward by the desired movement distance. According to the method described above, the pressurizing drive source is driven based on the load weight of the ground transport trolley to compress the first elastic member, thereby providing an appropriate elastic force and achieving the required wheel pressure.

### Brief Description of the Drawings

FIG. 1 is a perspective view showing a traveling mechanism according to an embodiment of the present invention.
FIG. 2 is a perspective view of the traveling mechanism as viewed from a different angle from that of FIG. 1.
FIG. 3 is a perspective view showing a traveling wheel assembly according to an embodiment of the present invention.
FIG. 4 is an exploded perspective view showing a traveling wheel assembly according to an embodiment of the present invention.
FIG. 5 is a perspective view showing a wheel cover and a pressurizing device of a traveling wheel assembly according to an embodiment of the present invention.
FIG. 6 is an exploded perspective view showing a wheel cover and a pressurizing device of a traveling wheel assembly according to an embodiment of the present invention.
FIG. 7 is a sectional perspective view showing a wheel cover and a pressurizing device of a traveling wheel assembly according to an embodiment of the present invention.
FIG. 8 is a sectional perspective view showing a wheel cover and a pressurizing device of a traveling wheel assembly according to an embodiment of the present invention.

### (List of reference signs)

1. Traveling wheel assembly
3. Caster wheel
4. Pressurizing device
7. Second elastic member
11. Traveling wheel
12. Wheel cover
13. Support member
14. Wheel drive source
15. Pressure receiving plate
21. Base portion
41. First elastic member
42. Movable member
43. Pressurizing drive source
48. Guide
61. Lead screw
65. Nut
91. Trigger plate
92. Second sensor
151. Recess
152. Cylindrical portion
422. Protrusion
1511. Wall portion
S. Groove

### Detailed Description of Embodiments

The technical solutions of embodiments and variants of the present invention will be described below with reference to the accompanying drawings. In addition, the scope of the present invention is not limited to the following embodiments and variants, and modifications can be arbitrarily made within the scope of the technical idea of the present invention. Moreover, in the following accompanying drawings, for the sake of easy understanding of each structure, the actual construction may differ from the scale, quantity, etc. of each construction in some cases. In addition, the same or corresponding parts in the drawings are denoted by the same reference signs, and will not be repeated.

### <First embodiment>

A traveling mechanism 100 according to a first embodiment will be described below.

In the drawings, for ease of understanding, mutually intersecting Z-direction, X-direction, and Y-direction are appropriately shown.

The Z-direction is defined based on a state in which a ground transport trolley to which the traveling mechanism 100 is applied is placed on the ground in a usable state. The Z-direction is a vertical direction of the ground transport trolley. The X-direction is, for example, a direction parallel to a direction of rotation axis of a traveling wheel 11.

One side and the other side of the Z-direction are also denoted as one Z-direction side Z1 and the other Z-direction side Z2. In this embodiment, the Z-direction one side Z1 and the Z-direction the other side Z2 correspond to an upper side and a lower side of the ground transport trolley in the usable state.

One side and the other side of the X-direction are also denoted as one X-direction side X1 and the other X-direction side X2. In this embodiment, in the ground transport trolley in the usable state, the X-direction is a direction perpendicular to the vertical direction.

One side and the other side of the Y-direction are also denoted as one Y-direction side Y1 and the other Y-direction side Y2. In this embodiment, in the ground transport trolley in the usable state, the Y-direction is a direction perpendicular to both the vertical direction and the X-direction (pickup direction). In addition, in this specification, the "parallel direction" also includes a substantially parallel direction, and the "perpendicular direction" also includes a substantially perpendicular direction.

A "fixed portion" of the present invention refers to part of the ground transport trolley for mounting a traveling wheel assembly, which serves as a reference for the relative movement of each component in the traveling wheel assembly. The fixed portion is not necessarily a single component, and for example, may be a combination of a plurality of components relatively fixed to each other, or a different part of a component. For example, the "base portion 21" in the first embodiment is the fixed portion.

### (Schematic structure of the ground transport trolley)

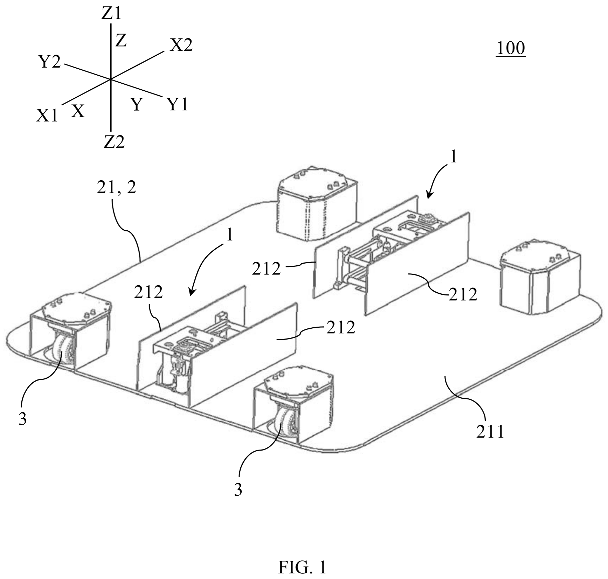

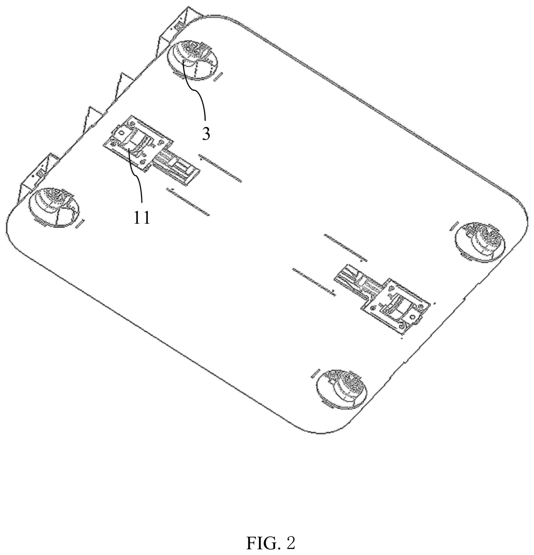

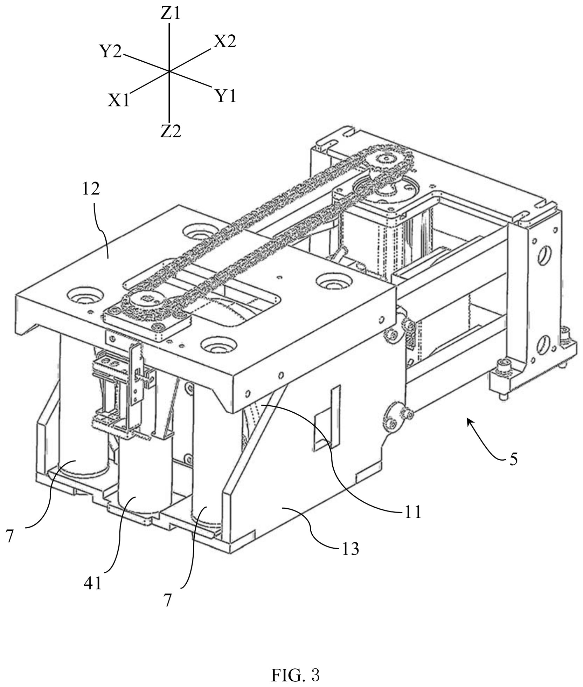

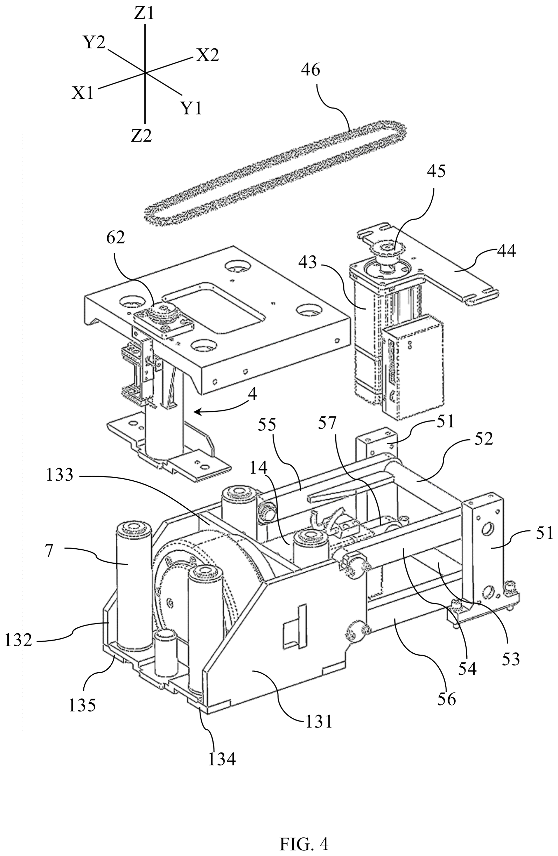

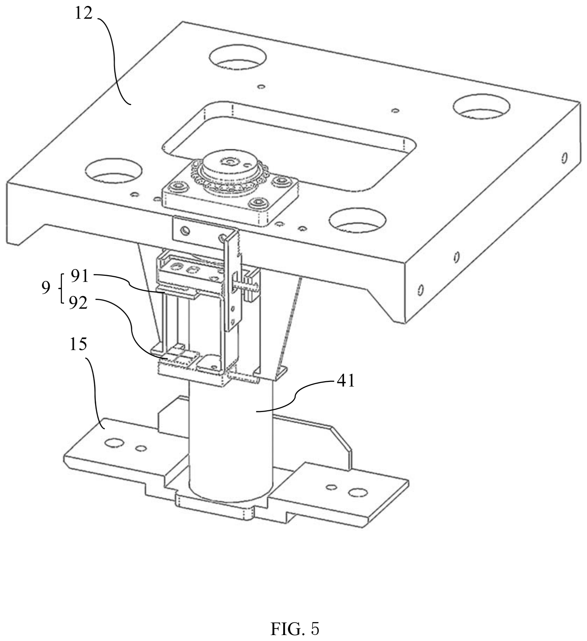

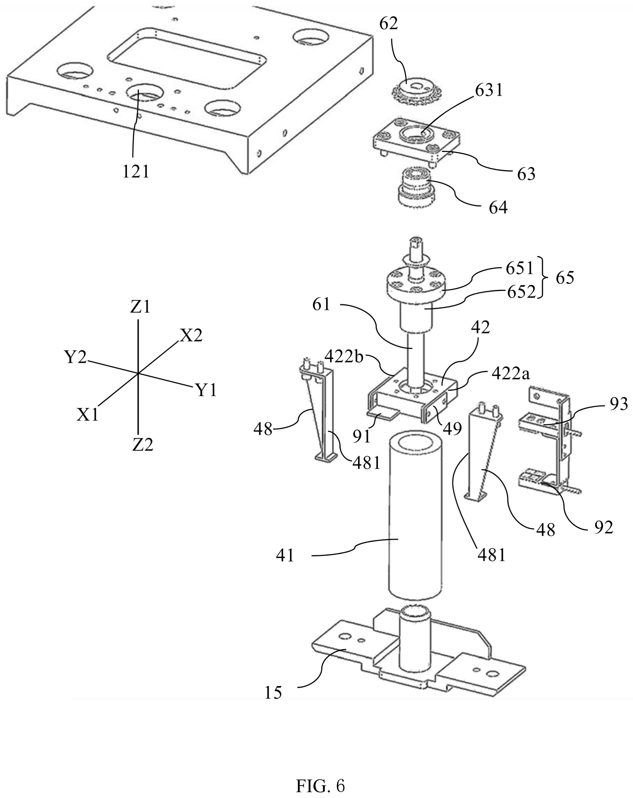

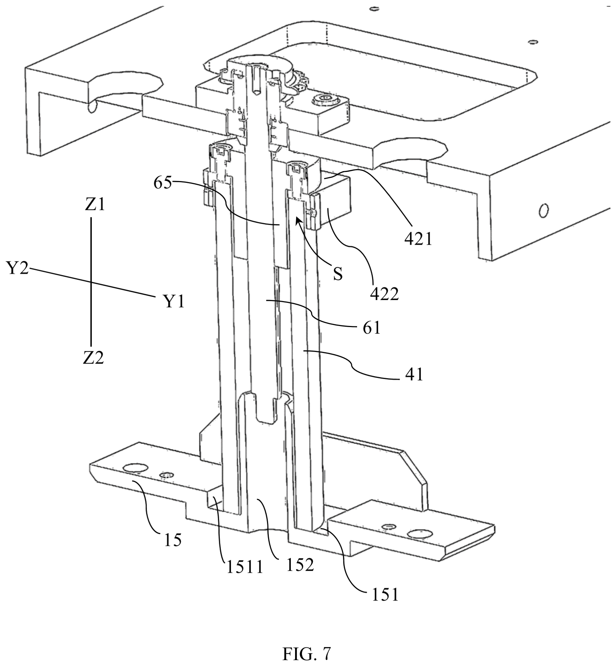

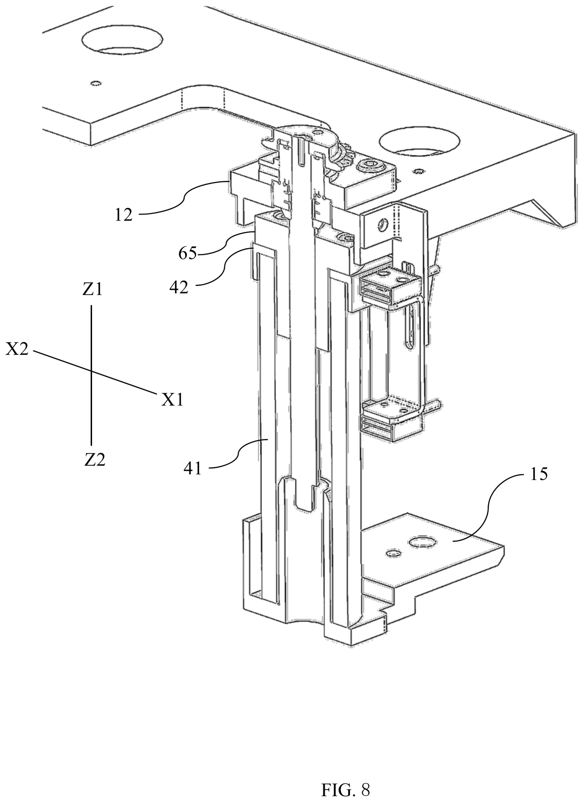

FIG. 1 is a perspective view showing the traveling mechanism 100 according to the first embodiment of the present invention. FIG. 2 is a perspective view of the traveling mechanism 100 as viewed from a different angle from that of FIG. 1. FIG. 3 is a perspective view showing a traveling wheel assembly 1 of the traveling mechanism 100. FIG. 4 is an exploded perspective view showing the traveling wheel assembly 1. FIG. 5 is a perspective view showing a wheel cover and a pressurizing device of the traveling wheel assembly 1. FIG. 6 is an exploded perspective view showing the wheel cover 12 and the pressurizing device 4 of the traveling wheel assembly 1. FIG. 7 is a sectional perspective view showing the wheel cover 12 and the pressurizing device 4 of the traveling wheel assembly 1. FIG. 8 is a sectional perspective view showing the wheel cover 12 and the pressurizing device 4 of the traveling wheel assembly 1.

The traveling mechanism 100 may be applied to, for example, a ground transport trolley for transporting goods. The traveling mechanism 100 includes a traveling wheel assembly 1, a chassis 2, and a caster wheel 3.

The traveling wheel assembly 1 and the caster wheel 3 are supported on the chassis 2. A shape of the chassis is not particularly limited. For example, the chassis may be in a cuboid shape. The chassis 2 includes a base portion 21, and may also include a top plate (not shown) covering the base portion 21 from above, and side plates (not shown) connecting edge portions of the base portion 21 to edge portions of the top plate. That is, the base portion 21 is part of the chassis 2. Moreover, the chassis 2 may also be provided with a notch portion that is open in at least one direction, a through portion extending therethrough in the vertical direction, etc. A storage space is formed inside the chassis 2. Parts of the traveling wheel assembly 1 and the caster wheel 3 are accommodated in the storage space of the chassis 2. Moreover, the storage space of the chassis 2 can accommodate a control unit for traveling, a power supply module, etc.

Mounting positions of the traveling wheel assembly 1 and the caster wheel 3 in the chassis 2 are not particularly limited. In the traveling mechanism 100 according to this embodiment, two traveling wheel assemblies 1 are arranged in the X-direction in the middle of the chassis 2 in the Y-direction, and caster wheels 3 are respectively provided on one Y-direction side Y1 and the other Y-direction side Y2 of each traveling wheel assembly 1. The base portion 21 includes: a bottom plate 211 which is substantially plate-shaped with a thickness direction in the vertical direction; and a wall 212 extending upward from the bottom plate 211. In this embodiment, walls 212, 212 opposed each other in the Y-direction are provided for each traveling wheel assembly 1.

### (Traveling wheel assembly)

In this embodiment, the two traveling wheel assemblies 1 have the same structure. The structure of the traveling wheel assembly 1 will be described below by an example of the traveling wheel assembly 1 located on one X-direction side X1 of the two traveling wheel assemblies 1.

The traveling wheel assembly 1 includes a traveling wheel 11, a wheel cover 12, a support member 13, an electric motor 14, and a pressurizing device 4.

The traveling wheel 11 is located on one X-direction side X1 of a second plate 133 later described, and is rotatably supported on the second plate 133. For example, a wheel shaft of the traveling wheel 11 is rotatably supported on the second plate 133 via a bearing (not shown). That is, the support member 13 supports the traveling wheel 11 to be rotatable.

The traveling wheel 11 has a wheel shaft (not shown) connected to an output end of the electric motor 14 serving as a wheel drive source. The traveling wheel 11 is driven to rotate by the electric motor 14. The electric motor 14 may be a servo electric motor, a brushless electric motor, a stepper electric motor, etc.

The wheel cover 12 is fixed to the corresponding walls 212, 212 by means such as fastening with fasteners such as screws or welding, so as to be fixedly connected to the base portion 21.

The support member 13 includes: a pair of first plates 131, 132 disposed opposite each other in the Y-direction; the second plate 133 fixedly disposed between the first plates 131, 132; a bent portion 134 bent from a lower end of the first plate 131 toward the first plate 132 side (the other Y-direction side Y2); and a bent portion 135 bent from a lower end of the first plate 132 toward the first plate 131 side (one Y-direction side Y1). The second plate 133 is plate-shaped with a thickness direction in the X-direction. The wheel drive source 14 is mounted on the other X-direction side X2 of the second plate 133. The bent portions 134, 135 are located above a lower end of the traveling wheel 11.

The support member 13 is located below the wheel cover 12. The support member 13 is vertically movably connected to the base portion 21. In this embodiment, the support member 13 is connected to the base portion 21 by means of a hinge mechanism 5. But not limited to this, it is also possible to use a connecting structure other than the hinge mechanism 5 to vertically movably connect the support member 13 to the base portion 21.

The hinge mechanism 5 includes: a pair of seat portions 51, 51 disposed opposite each other in the Y-direction and fixed to the base portion 21; two shaft portions 52, 53 configured between the pair of seat portions 51; and swing levers 54, 55 having base ends (ends close to the seat portions 51, 51) connected to the shaft portion 52, and swing levers 56, 57 having base ends connected to the shaft portion 53. The pair of seat portions 51, 51 are fixed to an upper surface of the bottom plate 211 by means of fasteners such as screws, for example. The two shaft portions 52, 53 are configured in parallel one above another between the pair of seat portions 51, 51. The two shaft portions 52, 53 each have a cylindrical shape extending in the Y-direction. The swing levers 54 to 57 extend in a direction perpendicular to the Y-direction.

Respective front ends (ends away from the seat portions 51, 51) of the swing levers 54 to 57 are swingably hinged to the first plates 131, 132 of the support member 13. The base ends of the swing levers 54, 55 are swingably supported on the seat portions 51, 51 via the shaft portion 52, and the base ends of the swing levers 56, 57 are swingably supported on the seat portions 51, 51 via the shaft portion 53. Thus, the support member 13 is vertically movably connected to the base portion 21. For example, two ends of each shaft portion 52, 53 in the Y-direction are rotatably supported on the seat portions 51, 51, respectively. The base ends of the swing levers 54, 55 are fixed to the shaft portion 52, and the base ends of the swing levers 56, 57 are fixed to the shaft portion 53. Moreover, it is also possible that the two ends of each shaft portion 52, 53 in the Y-direction are fixedly supported on the seat portions 51, 51, respectively, and the base ends of the swing levers 54, 55 are rotatably supported on the shaft portion 52 about an axis of the shaft portion 52, and the base ends of the swing levers 54, 55 are rotatably supported on the shaft portion 53 about an axis of the shaft portion 53.

### (Pressurizing device)

The pressurizing device 4 includes a first elastic member 41, a movable member 42, and a pressurizing drive source 43.

A bottom end of the first elastic member 41 is supported on the support member 13. The movable member 42 is located above the first elastic member 41 and abuts against a top end of the first elastic member 41. The movable member 42 is driven by the pressurizing drive source 43, such that the movable member 42 can move downward relative to the wheel cover 12 to apply a force to the top end of the first elastic member 41 to compressively deform the first elastic member 41 to increase a ground pressure of the traveling wheel 11 via the support member 13.

In this embodiment, the pressurizing drive source 43 is an electric motor, the first elastic member 41 is a spring, and the pressurizing device 4 includes a linear actuator. By means of the linear actuator, the rotational movement of the electric motor serving as the pressurizing drive source 43 is converted directly or indirectly via a transmission mechanism into the vertical movement of the movable member 42, so as to compress or release the spring 41. Promoting the compression of the spring 41 enables the traveling wheel 1 1 to be subjected to additional ground pressure. The electric motor 43 may, for example, be a servo electric motor.

The pressurizing device 4 may further include a first mounting plate 44. The electric motor 43 is fixedly connected to the seat portions 51, 51 by means of the first mounting plate 44. For example, the first mounting plate 44 is fixed to a housing of the electric motor 43 by means of fasteners such as screws, and to the seat portions 51, 51, respectively, by means of fasteners such as screws.

The traveling wheel assembly 1 further includes a pressure receiving plate 15. A bottom end of the first elastic member 41 abuts against an upper surface of the pressure receiving plate 15. Two side portions of the pressure receiving plate 15 in the Y-direction are superposed on the bent portions 134, 135 of the support member 13, and are fixedly connected to the bent portions 134, 135, respectively, by means of fasteners such as screws, for example. Thus, the bottom end of the spring 41 is supported on the support member 13 via the pressure receiving plate 15.

Moreover, the pressure receiving plate 15 is provided with a downwardly recessed recess 151. The recess 151 is provided with an upwardly protruding cylindrical portion 152. That is, the pressure receiving plate 15 is provided with the upwardly protruding cylindrical portion 152. The cylindrical portion 152 has a cylindrical shape that is open at upper and lower ends. A central through portion of the cylindrical portion 152 allows a lead screw to pass through.

Moreover, the cylindrical portion 152 is inserted into a cavity of the spring 41. In other words, a lower portion of the spring 41 is sleeved outside the cylindrical portion 152.

The recess 151 has a wall portion 1511. That is, the pressure receiving plate 15 is provided with the wall portion 1511. In a direction perpendicular to the vertical direction (e.g., the Y-direction), the cylindrical portion 152 is opposed the wall portion 1511 with the spring 41 therebetween. More specifically, the cylindrical portion 152 is opposed the wall portion 1511 of the recess 151 on a radially inner side centered on an axis of the lead screw 61. The axis of the lead screw 61 is in the vertical direction. A bottom end portion of the spring 41 is located between the cylindrical portion 152 and the wall portion 1511 of the recess 151.

The linear actuator described above has a lead screw 61, a transmission member 62, a second mounting plate 63, a bearing 64, and a nut 65. The lead screw 61 is, for example, a ball screw. The lead screw 61 is inserted into the cavity of the spring 41. Moreover, the first elastic member 41 may be other elastic members having a cavity into which the lead screw 61 is inserted.

The transmission member 62 is located above the second mounting plate 63. The transmission member 62 is fixed to a top end of the lead screw 61, such that the lead screw 61 can rotate with the transmission member 62.

In this example, the transmission member 62 is a driven sprocket. The pressurizing device 4 includes a sprocket and chain transmission mechanism. The lead screw 61 is driven to rotate by the electric motor 43 via the sprocket and chain transmission mechanism. The sprocket and chain transmission mechanism includes: a drive sprocket 45 connected to an output end of the electric motor 43; a driven sprocket 62 connected to the top end of the lead screw 61; and a chain 46 engaging the drive sprocket 45 and the driven sprocket 62. Each of the drive sprocket 45 and the driven sprockets 62 is configured to be rotatable about an axis in the vertical direction. The chain 46 meshes with each of the drive sprocket 45 and the driven sprocket 62. The drive sprocket 45 is driven to rotate by the electric motor 43, and the drive sprocket 45 transmits power to the driven sprocket 62 via the chain 46, so as to drive the driven sprocket 62 to rotate.

The second mounting plate 63 is plate-shaped with a thickness direction in the vertical direction. The second mounting plate 63 is provided with a first through hole 631 extending therethrough in the thickness direction. The bearing 64 is configured in the first through hole 631. The lead screw 61 is rotatably supported on the second mounting plate 63 via the bearing 64. The lead screw 61 is restricted by the bearing 62 to perform only rotational movement. Moreover, the second mounting plate 63 is fixed to an upper surface of the wheel cover 12 by means of fasteners such as screws. Thus, the lead screw 61 is rotatably supported on the wheel cover 12.

The wheel cover 12 is provided with a second through hole 121 corresponding to the first through hole 631, to allow the lead screw 61, etc., to pass through.

The nut 65 is in threaded engagement with the lead screw. In this embodiment, the nut 65 has a large-diameter portion 651 and a small-diameter portion 652. The small-diameter portion 652 is located on a lower side of the large-diameter portion 651, and the small-diameter portion 652 has a smaller outer diameter than the large-diameter portion 651.

The nut 65 is fixed to the movable member 62. When the nut 65 moves in the vertical direction due to the rotation of the lead screw 61, the movable member 62 moves together with the nut 65.

The movable member 42 has a rectangular outer contour when viewed in the vertical direction. The movable member 42 has an annular portion 421 surrounding the small-diameter portion 652 of the nut 65, and the annular portion 421 has a rectangular outer contour when viewed in the vertical direction. An upper surface of the annular portion 421 is in contact with a lower surface of the large-diameter portion 651. The annular portion 421 and the large-diameter portion 651 are fixed by means of fasteners such as screws.

The movable member 42 abuts against the top end of the spring 41 at a lower surface of the annular portion 421. The movable member 42 further has a protrusion 422. The protrusion 422 protrudes downward from an edge portion of the annular portion 421. The protrusion 422 is generally rectangular in shape. The protrusion 422 is opposite the small-diameter portion 652 of the nut 65 on a radially outer side centered on the axis of the lead screw 61. A top end portion of the spring 41 is located between the small-diameter portion 652 of the nut 65 and the protrusion 422. That is, a groove S is formed between the nut 65 and the movable member 42. The groove S opens downward and the top end of the spring 41 is located in the groove S. Moreover, it is also possible to form a downwardly open groove in the movable member 42 with the top end of the spring 41 in the groove.

The pressurizing device 4 further includes a guide 48 to guide the movement of the movable member 42 in the vertical direction. In this embodiment, two guides 48 are provided on two sides of the movable member 42 in the Y-direction. The provision of the guides 48 can restrict the rotation of the nut 65 and the movable member 42 (the nut 65 cannot rotate but can only perform axial reciprocating movement along the lead screw 61), enabling the nut and the movable member to move smoothly in the vertical direction. By controlling the movement of the nut 65, a vertical position of the movable member 42 can be adjusted, thereby adjusting a compression amount of the spring 41 to achieve the purpose of controlling a wheel pressure.

The two guides 48 are fixed to the wheel cover 12 at top ends thereof by means of fasteners such as screws. The movable member 42 has outer surface portions 422a, 422b facing the Y-direction on the protrusion 422. The outer surface portions 422a, 422b function as rotation-preventing portions. That is, the movable member 42 has rotation-preventing portions. The guides 48 are in contact with the outer surface portions 422a, 422b in a manner that prevents the movable member 42 from rotating. In this embodiment, the guides 48 are in contact with the outer surface portions 422a, 422b in a direction perpendicular to the vertical direction.

In this embodiment, the outer contour of the movable member 42 is rectangular when viewed in the vertical direction. The rectangle has two opposite sides in the Y-direction and two opposite sides in the X-direction. In this embodiment, the two guides 48 are respectively opposite the two opposite sides of the rectangle in the Y-direction. More specifically, the outer surface portions 422a, 422b of the protrusion 422 facing the Y-direction form the two opposite sides of the rectangle in the Y-direction. The two guides 48 have guide surfaces 481 opposite the outer surface portions 422a, 422b, respectively. The two guides 48 guide the movement of the movable member 42 in the vertical direction via the guide surfaces 481. Moreover, for example, sliding plates 49 with low surface roughness may be provided between the movable member 42 and the guides 48 to reduce a frictional force when contacting the guide surfaces 481. For example, the sliding plates 49 are fixed to the outer surface portions 422a, 422b. In this case, the guide surface 481 of the guide 48 is in contact with the sliding plate 49, and the sliding plate 49 functions as a rotation-preventing portion. In addition, the number of guides 48 is not particularly limited and may be one or three or more. The rotation-preventing portion is not limited to a planar shape, and may also be a curved shape.

Moreover, the traveling wheel assembly 1 further includes a second elastic member 7. The number of second elastic members 7 is not particularly limited. For example, four second elastic members 7 are provided around the traveling wheel 11. A bottom end of each second elastic member 7 is supported on the support member 13 and a top end thereof is supported on the wheel cover 12. In this embodiment, the bottom ends of two second elastic members 7 are supported on the support member 13 via the pressure receiving plate 15. The second elastic member 7 exerts a downward force on the support member 13 via compressive deformation. The second elastic member 7 is, for example, a spring. Moreover, it is also possible that one or more second elastic members other than four are provided around the traveling wheel 11.

An example of an operation of the pressurizing device 4 will be described below.

The drive sprocket 45 is driven to rotate by the electric motor 43, and the drive sprocket 45 transmits power to the driven sprocket 62 via the chain 46, so as to rotate the driven sprocket 62 together with the lead screw 61. When the lead screw 61 is rotated in one side or the other side of a circumferential direction, the nut 65 fixed to the movable member 42 is restricted from rotating by the guides 48 and can move only in the vertical direction. Thus, the vertical movement of the movable member 42 is achieved.

In this embodiment, the electric motor serving as the pressurizing drive source 43 is driven to rotate by a certain angle, such that the first elastic member 41 is compressed to provide an appropriate elastic force. For example, if it is necessary to adjust and increase the wheel pressure, the electric motor serving as the pressurizing drive source 43 drives the lead screw 61 to rotate to move the movable member 42 downward, so as to compress the first elastic member 41 to provide a greater wheel pressure for the traveling wheel 11.

The elastic force of the first elastic member 41 acts on the chassis 2 and the traveling wheel assembly 1, and by changing the position of the nut 65, the elastic force of the first elastic member 41 can be adjusted, such that the ground pressure of the traveling wheel 11 can be controlled. Moreover, maintaining the position of the lead screw 61 ensures the pressure provided by the first elastic member 41, which can be achieved by stopping the rotation of the electric motor or by adding a brake function.

In an example, a desired movement distance of the movable member 42 can be determined based on a load weight of the ground transport trolley using the traveling wheel assembly 1, and the pressurizing drive source 43 is caused to drive the movable member 42 to move downward by the desired movement distance.

For example, the ground transport trolley includes: a first sensor (not shown) for detecting the load weight of the ground transport trolley; and a control unit (not shown) for controlling an operation of the electric motor (pressurizing drive source) 43. The first sensor is a gravity sensor. The control unit receives a first signal related to the load weight of the ground transport trolley detected by the first sensor, determines the desired movement distance of the movable member based on the first signal, and causes the pressurizing drive source 43 to drive the movable member 42 to move downward by the desired movement distance. As an example, pre-set data of values of the desired movement distance corresponding to the load weight may be stored in a memory included in the control unit, and the desired movement distance is obtained by reading the data stored in the memory.

In this embodiment, a pressurizing device 4 and a plurality of second elastic members 7 are provided around the traveling wheel 11. Each of the first elastic member 41 and the second elastic member 7 is a spring.

When unloaded, the movable member 42 is in contact with (abuts against) the top end of the uncompressed or compressed first elastic member 41.

When unloaded, the compressed second elastic members 7 (or the compressed second elastic members 7 and the compressed first elastic member 41) can ensure the normal operation of the ground transport trolley. After loading, the pressurizing device 4 of the traveling wheel assembly 1 can be activated according to the load weight to increase the pressure based on the load, ensuring that the pressure at this time enables the ground transport trolley to operate normally under load. Thus, the ground pressure of the traveling wheel 11 can be dynamically adjusted, such that the electric motor (pressurizing drive source) 43 does not need to operate when unloaded, and after loading, the electric motor is controlled based on the actual load weight to increase the ground pressure for the traveling wheel 11, ensuring normal traveling even under heavy load.

Moreover, the ground transport trolley includes a limiting mechanism 9 disposed on at least one of the movable member 42, the wheel cover 12, and the base portion 21. The limiting mechanism is configured to limit the movable member 42 from moving downward beyond a predetermined position. Thus, limiting the movement stroke of the nut 65 of the traveling wheel assembly 1 ensures a definite position during each reset and also prevents the electric motor from exceeding a predetermined stroke, which would cause structural damage or other abnormalities. For example, it can avoid abnormalities such as electric motor overload and damage to the first elastic member 41 due to excessive compression stroke, caused by an excessively large downward stroke of the movable member 42. Moreover, it can limit the stroke of the nut 65; for example, when a ball screw is used, if the stroke is exceeded, balls will fall off, resulting in abnormal operation of the lead screw.

In an example, the limiting mechanism includes the control unit described above, a trigger plate 91, and a second sensor 92. The trigger plate 91 is fixedly disposed on the movable member 42 to move together with the movable member 42. The second sensor 92 is fixed to the wheel cover 12 via a bracket and is located below the trigger plate 91. The second sensor 92 may use an inductive proximity switch sensor.

When the trigger plate 91 moves to a position where a distance from the second sensor 92 is less than a predetermined distance and triggers the second sensor 92, the second sensor 92 sends a second signal to the control unit, and the control unit that receives the second signal causes the pressurizing drive source 43 to stop operating.

Sometimes, abnormalities of an electric motor encoder, assembly errors, etc., may cause the downward stroke of the movable member 42 to exceed a design range. In this embodiment, by providing the limiting mechanism 9, when the movable member 42 attempts to move downward beyond the predetermined position, the second sensor 92 is triggered, which can timely stop the operation of the electric motor to avoid abnormalities.

Moreover, a third sensor 93 fixed to the wheel cover 12 via a bracket and located above the trigger plate 91 may also be provided. In an unloaded state of the ground transport trolley, the trigger plate 91 triggers the third sensor 93, and in this case, the first elastic member 41 is placed in a pressureless or low-pressure state.

The present invention has been exemplarily described above in conjunction with the accompanying drawings, and obviously, the specific implementation of the present invention is not limited to the above embodiments and variants.

For example, it is also possible that a plurality of pressurizing devices 4 are provided around the traveling wheel 11.

For example, it is also possible that the first elastic member 41 and the second elastic member 7 are elastic members other than springs. Moreover, it is also possible to omit the second elastic member 7.

For example, it is also possible that the pressurizing drive source 43 uses an oil cylinder or an electric cylinder.

For example, it is also possible that the second sensor 92 is fixed to the base portion 21 via a bracket.

For example, it is also possible that the limiting mechanism 9 limits the movable member 42 from moving downward beyond a predetermined position by means of a photoelectric sensor, a limit switch, etc.

For example, it is also possible that a synchronous belt and pulley transmission mechanism is used between the pressurizing drive source 43 and the linear actuator instead of a sprocket and chain transmission mechanism.

For example, it is also possible to arrange the pressurizing device around a non-driving wheel (e.g. caster wheel 3).

The preferred embodiments of the present invention are described in detail above with reference to the accompanying drawings. However, it is to be understood that the above description does not limit the present invention in any way and the technical features in various embodiments may be combined with each other in any way to form new embodiments. Moreover, those skilled in the art may make various other modifications and changes to the present invention as needed after understanding the above specific embodiments. All these do not depart from the essence of the present invention.

## Claims

1. A traveling wheel assembly for a ground transport trolley comprising a fixed portion, the traveling wheel assembly comprising:
a traveling wheel;
a wheel cover fixedly connected to the fixed portion;
a support member vertically movably connected to the fixed portion and supporting the traveling wheel to be rotatable; and
a pressurizing device,
the pressurizing device comprising:
a first elastic member having a bottom end supported on the support member;
a movable member movable downward relative to the wheel cover to apply a force to a top end of the first elastic member to compressively deform the first elastic member to increase a ground pressure of the traveling wheel via the support member; and
a pressurizing drive source for driving the movable member to move.

2. The traveling wheel assembly for a ground transport trolley according to claim 1, wherein
the pressurizing device comprises a linear actuator that directly or indirectly converts a rotational movement of an electric motor serving as the pressurizing drive source into a vertical movement of the movable member via a transmission mechanism, so as to compress or release the first elastic member.

3. The traveling wheel assembly for a ground transport trolley according to claim 2, wherein
the linear actuator has: a lead screw rotatably supported on the wheel cover and driven to rotate by the electric motor; and a nut in threaded engagement with the lead screw, the nut being fixed to the movable member, and
the first elastic member is an elastic member with a cavity into which the lead screw is inserted.

4. The traveling wheel assembly for a ground transport trolley according to claim 3, wherein
the pressurizing device comprises a sprocket and chain transmission mechanism, and
the sprocket and chain transmission mechanism comprises:
a drive sprocket connected to an output end of the electric motor;
a driven sprocket connected to a top end of the lead screw; and
a chain engaging the drive sprocket and the driven sprocket.

5. The traveling wheel assembly for a ground transport trolley according to claim 3, wherein
a groove is formed between the nut and the movable member, or in the movable member, the groove opens downward, and the top end of the first elastic member is located in the groove.

6. The traveling wheel assembly for a ground transport trolley according to claim 3, further comprising:
a pressure receiving plate fixedly connected to the support member, a bottom end of the first elastic member being supported on the pressure receiving plate,
wherein the pressure receiving plate is provided with an upwardly protruding cylindrical portion, and
the cylindrical portion is inserted into the cavity.

7. The traveling wheel assembly for a ground transport trolley according to claim 1, wherein
the movable member has a rotation-preventing portion, and
the pressurizing device further comprises a guide for guiding the movement of the movable member in a vertical direction, the guide being in contact with the rotation-preventing portion in a manner that prevents the movable member from rotating.

8. The traveling wheel assembly for a ground transport trolley according to claim 1, wherein
the traveling wheel assembly further comprises a wheel drive source for driving the traveling wheel to rotate.

9. The traveling wheel assembly for a ground transport trolley according to claim 1, further comprising:
a second elastic member having a bottom end supported on the support member and a top end supported on the wheel cover, the second elastic member exerting a downward force on the support member via compressive deformation,
wherein at least one of the first elastic member and the second elastic member is a spring.

10. A traveling mechanism, comprising a traveling wheel assembly for a ground transport trolley according to any one of claims 1 to 9.

11. A ground transport trolley, comprising a traveling wheel assembly for a ground transport trolley according to any one of claims 1 to 9, or a traveling mechanism according to claim 10.

12. The ground transport trolley according to claim 11, further comprising:
a first sensor for detecting a load weight of the ground transport trolley; and
a control unit for receiving a first signal related to the load weight of the ground transport trolley detected by the first sensor, determining a desired movement distance of the movable member based on the first signal, and causing the pressurizing drive source to drive the movable member to move downward by the desired movement distance.

13. The ground transport trolley according to claim 11, comprising:
a limiting mechanism disposed on at least one of the movable member, the wheel cover, and the fixed portion, the limiting mechanism being configured to limit the movable member from moving downward beyond a predetermined position.

14. The ground transport trolley according to claim 13, wherein
the limiting mechanism comprises:
a control unit for controlling an operation of the pressurizing drive source;
a trigger plate disposed on the movable member to move together with the movable member; and
a second sensor fixed to the wheel cover or the fixed portion via a bracket and located below the trigger plate,
wherein when the trigger plate moves to a position where a distance from the second sensor is less than a predetermined distance and triggers the second sensor, the second sensor sends a second signal to the control unit, and the control unit that receives the second signal causes the pressurizing drive source to stop operating.

15. A transport method for transporting goods using a ground transport trolley according to any one of claims 11 to 14,
the ground transport trolley further comprising a first sensor for detecting a load weight of the ground transport trolley, and
the transport method comprising: determining a desired movement distance of the movable member based on the load weight of the ground transport trolley detected by the first sensor, and causing the pressurizing drive source to drive the movable member to move downward by the desired movement distance.
